# EUROPEAN PATENT APPLICATION

(11) **EP 2 584 431 A1**
(43) Date of publication of application: **24.04.2013**
(21) Application number: 11185638.1
(22) Date of filing: 18.10.2011
(51) Int. Cl.: G06F 3/02, H01H 13/702, H01H 13/83, H01H 3/12

(54) **Illuminated Keyboard**

(71) Applicant: Primax Electronics Ltd, Taipei (TW)
(72) Inventor: Chen, Bo-An, Taiwan, ROC Taipei (TW)
(74) Representative: Rees, Simon John Lewis

(57) **Abstract**

An illuminated keyboard includes a supporting plate, a transparent frame plate, at least one key, a light source and a membrane switch circuit module. The light beam emitted by the light source is transmissible through the transparent frame plate. Moreover, the supporting plate has a supporting plate opening corresponding to the light source, and the light source is inserted into the supporting plate opening. Consequently, the light source may be located at a position under the supporting plate.

## Description

### FIELD OF THE INVENTION

The present invention relates to a keyboard, and more particularly to an illuminated keyboard with a luminous function.

### BACKGROUND OF THE INVENTION

Generally, the common input device of a computer system includes for example a mouse, a keyboard or a trackball. Via the keyboard, the user may input characters and commands into the computer system. As a consequence, most users and most manufacturers pay much attention to the development of keyboards.

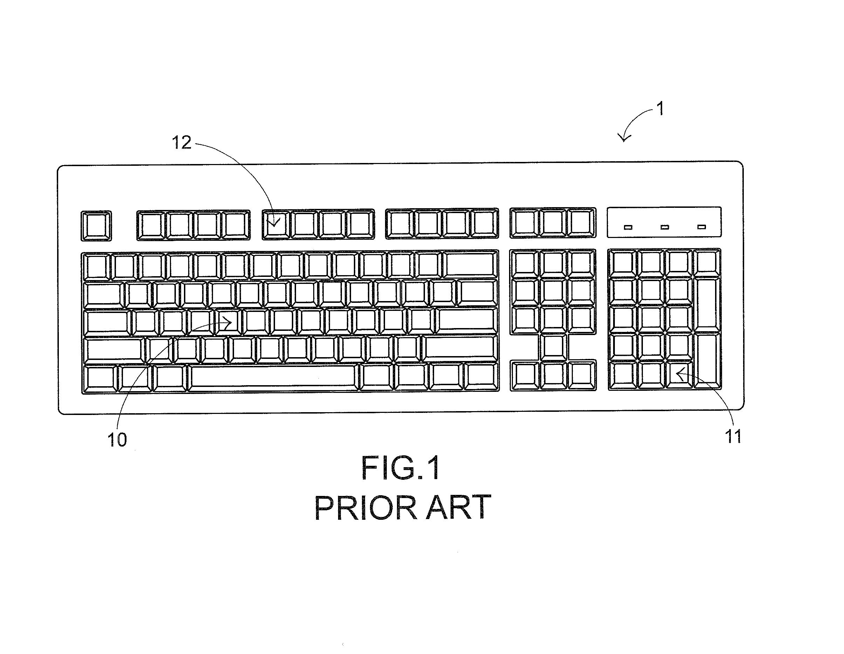

Hereinafter, the configurations and functions of a conventional keyboard device will be illustrated with reference to FIG. 1. FIG. 1 is a schematic view illustrating the outward appearance of a conventional keyboard. The surface of the conventional keyboard device 1 includes plural keys. These keys include ordinary keys 10, numeric keys 11 and function keys 12. When one or more keys are depressed by the user, a corresponding signal is issued to the computer, and thus the computer executes a function corresponding to the depressed key or keys. For example, when an ordinary key 10 is depressed, a corresponding English letter or symbol is inputted into the computer. When a numeric key 11 is depressed, a corresponding number is inputted into the computer. In addition, the function keys 12 (F1∼F12) can be programmed to cause corresponding application programs to provide certain functions.

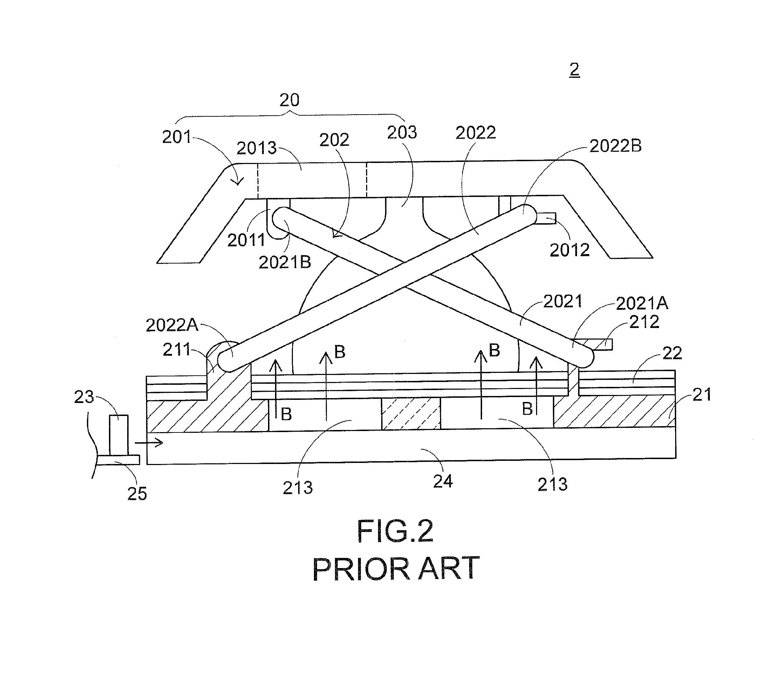

With the maturity of computing technologies, the conventional keyboard 1 that has basic functions fails to meet the users' requirements. For this reason, the keyboard manufacturers make efforts in designing novel keyboards with diversified functions. Recently, an illuminated keyboard with a luminous function has been disclosed. FIG. 2 is a schematic side view illustrating a conventional illuminated keyboard. As shown in FIG. 2, the illuminated keyboard 2 comprises a key 20, a metallic base plate 21, a membrane switch circuit module 22, a light source 23 and a light guide plate 24. The key 20 comprises a keycap 201, a scissors-type connecting member 202 and an elastic element 203. From top to bottom, the keycap 201, the scissors-type connecting member 202, the elastic element 203, the membrane switch circuit module 22, the metallic base plate 21 and the light guide plate 24 of the illuminated keyboard 2 are sequentially shown. The light source 23 is located at a side of the light guide plate 24. Via a flexible printed circuit (FPC) 25, the light source 23 is connected with a circuit board (not shown) of the illuminated keyboard 2. In addition, the light source 23 may acquire electric power via the flexible printed circuit 25. The light source 23 is used for emitting a light beam B. An example of the light source 23 is a light emitting diode (LED). In addition, the elastic element 203 is a light-transmissible rubbery element.

In FIG. 2, the light guide plate 24 is used to guide the light beam B, and thus the light beam B can be diffused to the whole keyboard. In addition, the light guide plate 24 is used to change the propagating direction of the light beam B, so that the light beam B is moved upwardly. The membrane switch circuit module 22 is disposed on the metallic base plate 21. Moreover, the metallic base plate 21 has a first fixing structure 211, a second fixing structure 212 and two openings 213. The light beam B can be transmitted through the openings 213 and incident into the membrane switch circuit module 22. The keycap 201 comprises a first keycap fixing structure 2011, a second keycap fixing structure 2012 and a light-transmissible region 2013. The scissors-type connecting member 202 comprises a first frame 2021 and a second frame 2022. A first end 2021A of the first frame 2021 is connected with the second fixing structure 212. A second end 2021B of the first frame 2021 is connected with the first keycap fixing structure 2011. A first end 2022A of the second frame 2022 is connected with the first fixing structure 211. A second end 2022B of the second frame 2022 is connected with the second keycap fixing structure 2012.

Please refer to FIG. 2 again. When the key 20 is depressed and moved downwardly relative to the metallic base plate 21, the first frame 2021 and the second frame 2022 of the scissors-type connecting member 202 are switched from an open-scissors state to a folded state. In addition, as the keycap 201 is moved downwardly to press the elastic element 203, the elastic element 203 is sustained against the membrane switch circuit module 22, and thus a key signal corresponding to the depressed key 20 is generated. Whereas, when the depressing force exerted on the key 20 is eliminated, an elastic force provided by the elastic element 203 is acted on the keycap 201. Due to the elastic force, the keycap 201 is moved upwardly relative to the metallic base plate 21, and the first frame 2021 and the second frame 2022 of the scissors-type connecting member 202 are switched from the folded state to the open-scissors state. Consequently, the keycap 201 is returned to its original position. After the light beam B is emitted by the light source 23, the light beam B is directed to the light guide plate 24. By the light guide plate 24, the propagating direction of the light beam B is changed. Consequently, a portion of the light beam B is sheltered by the metallic base plate 21, but the other portion of the light beam B is guided toward the membrane switch circuit module 22 through the openings 213. Then, the light beam B is successively transmitted through the membrane switch circuit module 22, the elastic element 203 and the light-transmissible region 2013 of the keycap 201, thereby illuminating the key 20.

The conventional illuminated keyboard, however, still has some drawbacks. For example, since the majority of the light beam B emitted by the light source 23 and located under the metallic base plate 21 is sheltered by the metallic base plate 21, the conventional illuminated keyboard fails to be uniformly illuminated.

### SUMMARY OF THE INVENTION

The present invention relates to an illuminated keyboard that can be illuminated in a more uniform fashion.

In accordance with an aspect of the present invention, there is provided an illuminated keyboard. The illuminated keyboard includes a supporting plate, a transparent frame plate, a membrane switch circuit module, at least one key, a light source supporting film, and a light source. The supporting plate has a supporting plate opening. The transparent frame plate is disposed over the supporting plate. The membrane switch circuit module is disposed on the transparent frame plate. The key is connected with the transparent frame plate. When the key is depressed, the key is sustained against the membrane switch circuit module. The light source supporting film is disposed under the supporting plate, and has a light source circuit pattern. The light source is disposed on the light source supporting film, connected with the light source circuit pattern, and inserted into the supporting plate opening. The light source is driven by the light source circuit pattern to emit a light beam.

In an embodiment, the membrane switch circuit module includes an upper wiring board, a partition plate and a lower wiring board. The upper wiring board has at least one upper contact. The partition plate is disposed under the upper wiring board, and has a partition plate opening. When the membrane switch circuit module is pressed, the upper contact is inserted into the partition plate opening. The lower wiring board is disposed under the partition plate, and has a lower contact corresponding to the upper contact. When the membrane switch circuit module is pressed, the upper contact is contacted with the lower contact.

In an embodiment, the illuminated keyboard further includes a light-guiding film. The light-guiding film is arranged between the supporting plate and the transparent frame plate for guiding the light beam and changing a propagating direction of the light beam.

In an embodiment, the light-guiding film has a light-guiding film opening corresponding to the supporting plate opening, wherein the light source is sequentially inserted into the supporting plate opening and the light-guiding film opening.

In an embodiment, the key includes a keycap, a scissors-type connecting member and an elastic element. The keycap is exposed to a surface of the illuminated keyboard, and includes a light-transmissible region. The scissors-type connecting member is arranged between the transparent frame plate and the keycap for connecting the transparent frame plate and the keycap, and allowing the keycap to be moved upwardly and downwardly relative to the transparent frame plate. The elastic element is arranged between the membrane switch circuit module and the keycap. When the keycap is pressed, the elastic element is compressed and sustained against the membrane switch circuit module, so that the upper contact is contacted with the lower contact. Whereas, when a depressing force exerted on the key is eliminated, an elastic force provided by the elastic element is acted on the keycap, so that the keycap is returned to an original position.

In an embodiment, the keycap includes a first keycap fixing structure and a second keycap fixing structure, and the transparent frame plate includes a first frame plate fixing structure and a second frame plate fixing structure. Moreover, the first frame plate fixing structure and the second frame plate fixing structure are integrally formed with the transparent frame plate.

In an embodiment, the scissors-type connecting member includes a first frame and a second frame. A first end of the first frame is connected with the second frame plate fixing structure. A second end of the first frame is connected with the first keycap fixing structure. A first end of the second frame is connected with the second keycap fixing structure. In addition, a second end of the second frame is connected with the first frame plate fixing structure.

In an embodiment, the transparent frame plate is made of a transparent material, the elastic element is a light-transmissible rubbery element, and the light source supporting film is a plastic film.

In an embodiment, the supporting plate is made of a metallic material.

In an embodiment, the light source is a side-view light emitting diode.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic view illustrating the outward appearance of a conventional keyboard;

FIG. 2 is a schematic side view illustrating a conventional illuminated keyboard;

FIG. 3 is a schematic view illustrating an illuminated keyboard according to an embodiment of the present invention;

FIG. 4 is a schematic exploded view illustrating a portion of the illuminated keyboard according to the embodiment of the present invention; and

FIG. 5 is a schematic side view illustrating a portion of the illuminated keyboard according to the embodiment of the present invention.

### DETAILED DESCRIPTION OF THE PREFERRED EMBODIMENT

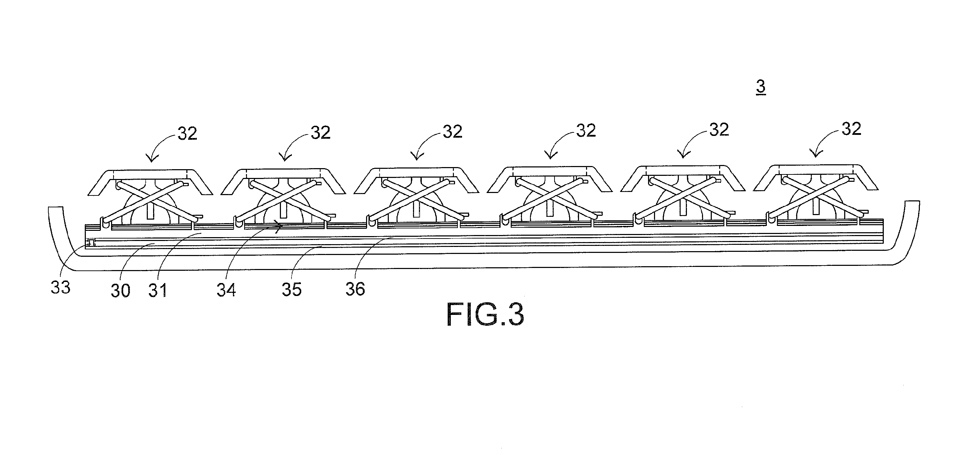

For obviating the drawbacks encountered from the prior art, the present invention provides an illuminated keyboard. FIG. 3 is a schematic view illustrating an illuminated keyboard according to an embodiment of the present invention. As shown in FIG. 3, the illuminated keyboard 3 comprises a supporting plate 30, a transparent frame plate 31, a plurality of keys 32, a row of light sources 33, a membrane switch circuit module 34, a light source supporting film 35, and a light-guiding film 36. For clarification, only a light source 33 is shown in the drawing. These keys 32 are disposed on the membrane switch circuit module 34. The membrane switch circuit module 34 is disposed on the transparent frame plate 31. The transparent frame plate 31 is disposed over the supporting plate 30. The light-guiding film 36 is arranged between the supporting plate 30 and the transparent frame plate 31. The light source supporting film 35 is disposed under the supporting plate 30. In this embodiment, the light source 33 is a side-view light emitting diode (LED). The number of light sources 33 is not equivalent to the number of the keys 32. For the whole illuminated keyboard 3, the light beams emitted by the row of light sources 33 are sufficient to illuminate all of the keys 32.

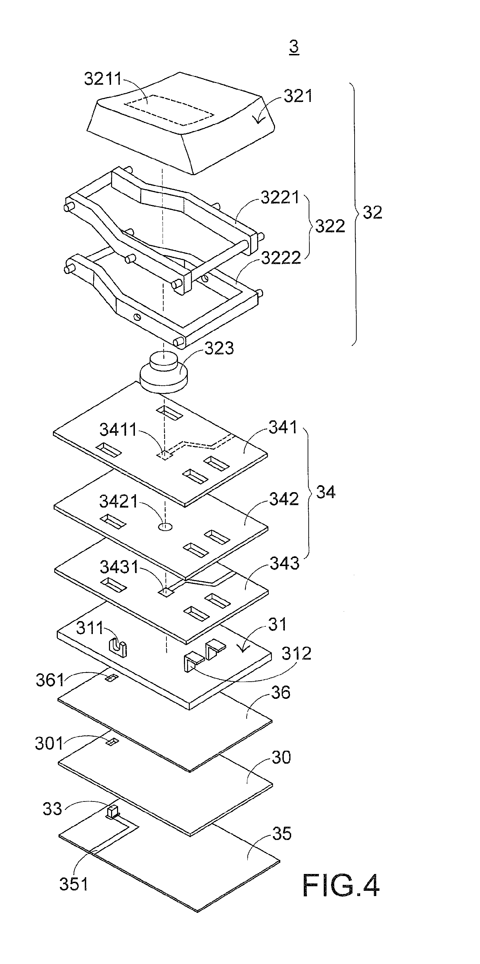

Hereinafter, the detailed configurations of the illuminated keyboard 3 will be illustrated by referring to a key 32 of FIG. 3 as well as FIG. 4. Please refer to FIG. 4, which is a schematic exploded view illustrating a portion of the illuminated keyboard according to the embodiment of the present invention. In FIG. 4, the supporting plate 30, the transparent frame plate 31, the key 32, the light source 33, the membrane switch circuit module 34, the light source supporting film 35 and the light-guiding film 36 are shown. The transparent frame plate 31 comprises a first frame plate fixing structure 311, a second frame plate fixing structure 312. It is preferred that the first frame plate fixing structure 311 and the second frame plate fixing structure 312 are integrally formed with the transparent frame plate 31. In this embodiment, the transparent frame plate 31 is made of a transparent material, so that the light beam is transmissible through the transparent frame plate 31 and not hindered by the transparent frame plate 31. Moreover, the key 32 comprises a keycap 321, a scissors-type connecting member 322 and an elastic element 323. The keycap 321 is exposed to a surface of the illuminated keyboard 3. The keycap 321 has a light-transmissible region 3211, which is arranged on a top surface of the keycap 321. The scissors-type connecting member 322 comprises a first frame 3221 and a second frame 3222. In addition, the elastic element 323 is a light-transmissible rubbery element, so that the light beam is transmissible through the elastic element 323 and not hindered by the elastic element 323.

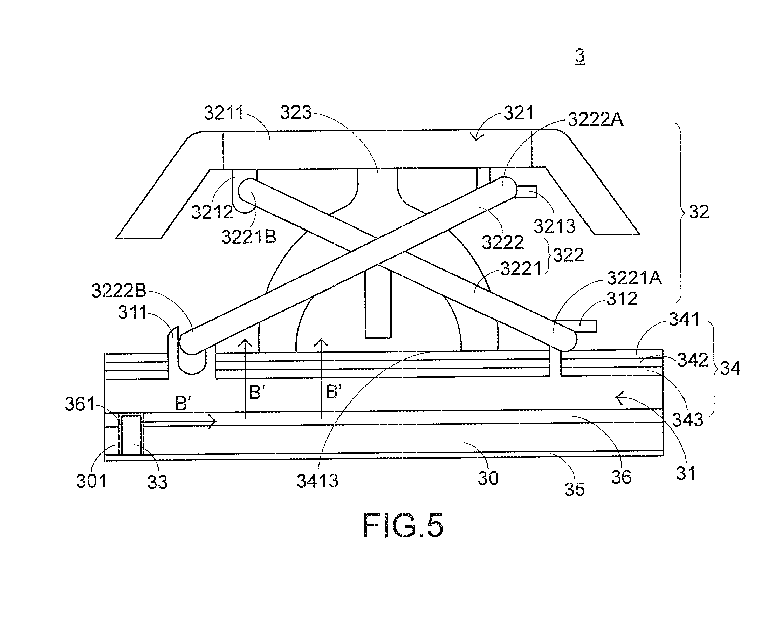

Please refer to FIG. 4 again. The light source supporting film 35 is disposed under the supporting plate 30, and has a light source circuit pattern 351. The light source 33 is disposed on the light source supporting film 35 and connected with the light source circuit pattern 351. The light source 33 is driven by the light source circuit pattern 351 to emit a light beam B' (see FIG. 5). The supporting plate 30 can reflect the light beam B'. The supporting plate 30 has a supporting plate opening 301 corresponding to the light source 33. The light-guiding film 36 is arranged between the supporting plate 30 and the transparent frame plate 31 for guiding the light beam B' and changing propagating direction of the light beam B', so that the light beam B' is directed to the key 32. The light-guiding film 36 has a light-guiding film opening 361 corresponding to the supporting plate opening 301. In this embodiment, the light source supporting film 35 is a plastic film, and the supporting plate 30 is made of a metallic material. Moreover, since the supporting plate 30 is made of the metallic material, the supporting plate 30 can provide good optical reflectivity. The membrane switch circuit module 34 is arranged between the transparent frame plate 31 and the key 32. Moreover, the membrane switch circuit module 34 comprises an upper wiring board 341, a partition plate 342 and a lower wiring board 343. The upper wiring board 341 has at least one upper contact 3411. The partition plate 342 has a partition plate opening 3421. When the membrane switch circuit module 34 is pressed, the upper contact 3411 is inserted into the partition plate opening 3421. The lower wiring board 343 has a lower contact 3431 corresponding to the upper contact 3411. When the membrane switch circuit module 34 is pressed, the upper contact 3411 will be contacted with the lower contact 3431.

Hereinafter, the relations between the components of the illuminated keyboard 3 will be illustrated with reference to FIG. 5. FIG. 5 is a schematic side view illustrating a portion of the illuminated keyboard according to the embodiment of the present invention. In the illuminated keyboard 3, the transparent frame plate 31 is disposed on the supporting plate 30. The supporting plate 30 may increase the structural strength of the transparent frame plate 31, so that the possibility of bending the transparent frame plate 31 is minimized. The light-guiding film 36 is arranged between the transparent frame plate 31 and the supporting plate 30. The light source supporting film 35 is disposed under the supporting plate 30. The light source 33 is disposed on the light source supporting film 35, and sequentially inserted into the supporting plate opening 301 and the light-guiding film opening 361. In such way, the light beam B' emitted by the light source 33 can be directed to the light-guiding film 36.

The membrane switch circuit module 34 is disposed on the transparent frame plate 31. Moreover, the upper wiring board 341 is stacked on the partition plate 342, and the partition plate 342 is stacked on the lower wiring board 343. The elastic element 323 is disposed on the membrane switch circuit module 34. The keycap 321 is disposed on the elastic element 323. The scissors-type connecting member 322 is arranged between the transparent frame plate 31 and the keycap 321. The scissors-type connecting member 322 is used for connecting the transparent frame plate 31 and the keycap 321, and allowing the keycap 321 to be moved upwardly and downwardly relative to the transparent frame plate 31. In the scissors-type connecting member 322, a first end 3221A of the first frame 3221 is connected with the second frame plate fixing structure 312, and a second end 3221B of the first frame 3221 is connected with a first keycap fixing structure 3212. In addition, a first end 3222A of the second frame 3222 is connected with a second keycap fixing structure 3213, and a second end 3222B of the second frame 3222 is connected with the first frame plate fixing structure 311.

When the key 32 is depressed and moved downwardly relative to the transparent frame plate 31, the first frame 3221 and the second frame 3222 of the scissors-type connecting member 322 are switched from an open-scissors state to a folded state. In addition, as the keycap 321 is moved downwardly to press the elastic element 323, the elastic element 323 is sustained against the membrane switch circuit module 34. In the membrane switch circuit module 34, the upper contact 3411 is inserted into the partition plate opening 3421 of the partition plate 342 to touch the lower contact 3431, so that electrical connection between the upper contact 3411 and the lower contact 3431 is established. Accordingly, a key signal corresponding to the depressed key 32 is generated. Whereas, when the depressing force exerted on the key 32 is eliminated, an elastic force provided by the elastic element 323 is acted on the keycap 321. Due to the elastic force, the keycap 321 is moved upwardly relative to the transparent frame plate 31, and the first frame 3221 and the second frame 3222 of the scissors-type connecting member 322 are switched from the folded state to the open-scissors state. Consequently, the keycap 321 is returned to its original position.

Please refer to FIG. 5 again. After the light beam B' is emitted by the light source 33, a first portion of the light beam B' is directed into the light-guiding film 36. Consequently, the propagating direction of the first portion of the light beam B' is changed, and the first portion of the light beam B' is sequentially transmitted through the transparent frame plate 31 and the membrane switch circuit module 34 to be directed to the key 32. The first portion of the light beam B' is partially transmitted through the elastic element 323 and directed to the key 32. The first portion of the light beam B' is also partially directed to the keycap 321 without the need of passing through the elastic element 323. A second portion of the light beam B' is projected downwardly and reflected by the supporting plate 30. Consequently, the propagating direction of the light beam B' is changed. That is, the second portion of the light beam B' is incident to the light-guiding film 36 and projected to the keypad along the above optical path. Afterwards, the light beam B' is transmitted through the light-transmissible region 3211 of the keycap 321, thereby illuminating the illuminated keyboard 3.

It is noted that the light-transmissible region 3211 of the keycap 321 is a character region or a symbol region at the surface of the keycap 321. For example, the light-transmissible region 3211 is an A-letter character region corresponding to the key A. Due to the above configurations, the light beam B' may be transmitted through the light-transmissible region 3211, thereby illuminating the character region or the symbol region of the key 32.

From the above description, the transparent frame plate of the illuminated keyboard of the present invention has functions similar to the metallic base plate of the conventional illuminated keyboard. That is, the transparent frame plate can be connected to the scissors-type connecting member. Through the scissors-type connecting member, the key is connected with the transparent frame plate. Moreover, since the transparent frame plate is made of a transparent material, the light source may be disposed under the transparent frame plate. In such way, the light beam may be transmitted through the transparent frame plate without being sheltered. In this situation, the brightness of the light beam passing through the keycap is enhanced. Moreover, since the majority of the light beam is not hindered by the conventional metallic base plate, the problem of non-uniformly illuminating the illuminated keyboard will be minimized. That is, since the transparent frame plate made of the transparent material is light-transmissible, the position of the light source is not as limited as the conventional illuminated keyboard. Moreover, the supporting plate has a supporting plate opening corresponding to the light source, and the light source is inserted into the supporting plate opening. Consequently, the light beam from the light source is not hindered by the supporting plate. That is, the light source may be located at a position under the supporting plate.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. An illuminated keyboard, comprising:
a supporting plate having a supporting plate opening;
a transparent frame plate disposed over said supporting plate;
a membrane switch circuit module disposed on said transparent frame plate;
at least one key connected with said transparent frame plate, wherein when said key is depressed, said key is sustained against said membrane switch circuit module;
a light source supporting film disposed under said supporting plate, and having a light source circuit pattern; and
a light source disposed on said light source supporting film, connected with said light source circuit pattern, and inserted into said supporting plate opening, wherein said light source is driven by said light source circuit pattern to emit a light beam.

2. The illuminated keyboard according to claim 1 wherein said membrane switch circuit module comprises:
an upper wiring board having at least one upper contact;
a partition plate disposed under said upper wiring board, and having a partition plate opening, wherein when said membrane switch circuit module is pressed, said upper contact is inserted into said partition plate opening; and
a lower wiring board disposed under said partition plate, and having a lower contact corresponding to said upper contact, wherein when said membrane switch circuit module is pressed, said upper contact is contacted with said lower contact.

3. The illuminated keyboard according to claim 1 further comprising a light-guiding film, which is arranged between said supporting plate and said transparent frame plate for guiding said light beam and changing a propagating direction of said light beam.

4. The illuminated keyboard according to claim 3 wherein said light-guiding film has a light-guiding film opening corresponding to said supporting plate opening, wherein said light source is sequentially inserted into said supporting plate opening and said light-guiding film opening.

5. The illuminated keyboard according to claim 1 wherein said key comprises:
a keycap exposed to a surface of said illuminated keyboard, and comprising a light-transmissible region;
a scissors-type connecting member arranged between said transparent frame plate and said keycap for connecting said transparent frame plate and said keycap, and allowing said keycap to be moved upwardly and downwardly relative to said transparent frame plate; and
an elastic element arranged between said membrane switch circuit module and said keycap, wherein when said keycap is pressed, said elastic element is compressed and sustained against said membrane switch circuit module, so that said upper contact is contacted with said lower contact, wherein when a depressing force exerted on said key is eliminated, an elastic force provided by said elastic element is acted on said keycap, so that said keycap is returned to an original position.

6. The illuminated keyboard according to claim 5 wherein said keycap comprises a first keycap fixing structure and a second keycap fixing structure, wherein said transparent frame plate comprises a first frame plate fixing structure and a second frame plate fixing structure, wherein said first frame plate fixing structure and said second frame plate fixing structure are integrally formed with said transparent frame plate.

7. The illuminated keyboard according to claim 6 wherein said scissors-type connecting member comprises a first frame and a second frame, wherein a first end of said first frame is connected with said second frame plate fixing structure, a second end of said first frame is connected with said first keycap fixing structure, a first end of said second frame is connected with said second keycap fixing structure, and a second end of said second frame is connected with said first frame plate fixing structure.

8. The illuminated keyboard according to claim 1 wherein said transparent frame plate is made of a transparent material, said elastic element is a light-transmissible rubbery element, and said light source supporting film is a plastic film.

9. The illuminated keyboard according to claim 1 wherein said supporting plate is made of a metallic material.

10. The illuminated keyboard according to claim 1 wherein said light source is a side-view light emitting diode.
